**Europäisches Patentamt**

**European Patent Office**

**Office européen des brevets**

(19)

(11) Veröffentlichungsnummer: **0 102 435**
**B1**

## EUROPÄISCHE PATENTSCHRIFT

(12)

(45) Veröffentlichungstag der Patentschrift:
**09.04.86**

(21) Anmeldenummer: **82810366.3**

(22) Anmeldetag: **03.09.82**

(51) Int. Cl.⁴: **C 02 F 3/12, C 02 F 3/22,**
**B 01 F 3/04**

(54) **Verfahren und Vorrichtung zur Aufrechterhaltung einer Feinstdispersion von Gasen in Flüssigkeiten.**

(43) Veröffentlichungstag der Anmeldung:
**14.03.84 Patentblatt 84/11**

(45) Bekanntmachung des Hinweises auf die Patenterteilung:
**09.04.86 Patentblatt 86/15**

(84) Benannte Vertragsstaaten:
**AT BE CH DE FR GB IT LI NL SE**

(56) Entgegenhaltungen:
**CH - A - 578 367**
**DE - A - 1 907 278**
**DE - A - 2 554 440**
**US - A - 3 878 097**
**US - A - 4 287 070**

(73) Patentinhaber: **BRV TECHNOLOGIE-SYSTEME AG, Rue des Croix 4, CH-2014 Bôle (CH)**

(72) Erfinder: **Breuer, Hans, Schilfweg 4, CH-2500 Biel (CH)**
Erfinder: **Rindelaub, Frank, Allée du Bled 21, CH-2015 Areuse (CH)**
Erfinder: **Velebil, Gerhard, Im Brühl 6, D-7846 Schliengen 5 (CH)**

(74) Vertreter: **Seehof, Michel et al, c/o AMMANN PATENTANWAELTE AG BERN Schwarztorstrasse 31, CH-3001 Bern (CH)**

## Beschreibung

Die vorliegende Erfindung bezieht sich auf ein Verfahren zur Aufrechterhaltung einer Feinstdispersion von Gasen in Flüssigkeiten, wobei die Gase in der oberen Hälfte einer vertikal angeordneten Umlaufvorrichtung unter gleichzeitigem mechanischen Umwälzen mit einer definierten Strömungsgeschwindigkeit und bei definiertem hydrostatischem Druck eingebracht werden, und auf eine Vorrichtung zur Ausführung des Verfahrens. Dabei wird insbesondere an die aerobe Abwasser- und Klärschlammbehandlung sowie Klärschlammverwertung und -entsorgung gedacht.

Ein eingangs erwähntes Verfahren ist aus der CH-A-578 367 bekannt. Dabei wird das Sauerstorff enthaltende Gas sowohl in die Steigals auch in die Sinkkammer eingeleitet, wobei die Kammern eine Länge bis zu 250 m aufweisen können. Die Auftriebskraft der Gasbläschen bewirkt eine kurze Reaktionszeit, wodurch die grosse Länge der Kammern und eine lange Reaktionsdauer resultiert. Daraus folgt ein aufwendiger Bau- und Platzbedarf sowie ein hoher Energieaufwand.

Es ist demgegenüber Aufgabe der vorliegenden Erfindung ein Verfahren und eine Vorrichtung zu dessen Ausführung anzugeben, mittels welcher eine Feinstdispersion von Gasen in einer Flüssigkeit erreicht und aufrechterhalten werden kann, womit die biologisch erforderliche Behandlungszeit und der Energiebedarf erniedrigt werden und somit eine wesentliche Verringerung des Aufwand an Baukosten und des Platzbedarfs für Kläranlagen oder Reinigungs- und Prozessanlagen erreicht wird.

Diese Aufgabe wird mit einem in den Ansprüchen beschriebenen Verfahren und Vorrichtung gelöst.

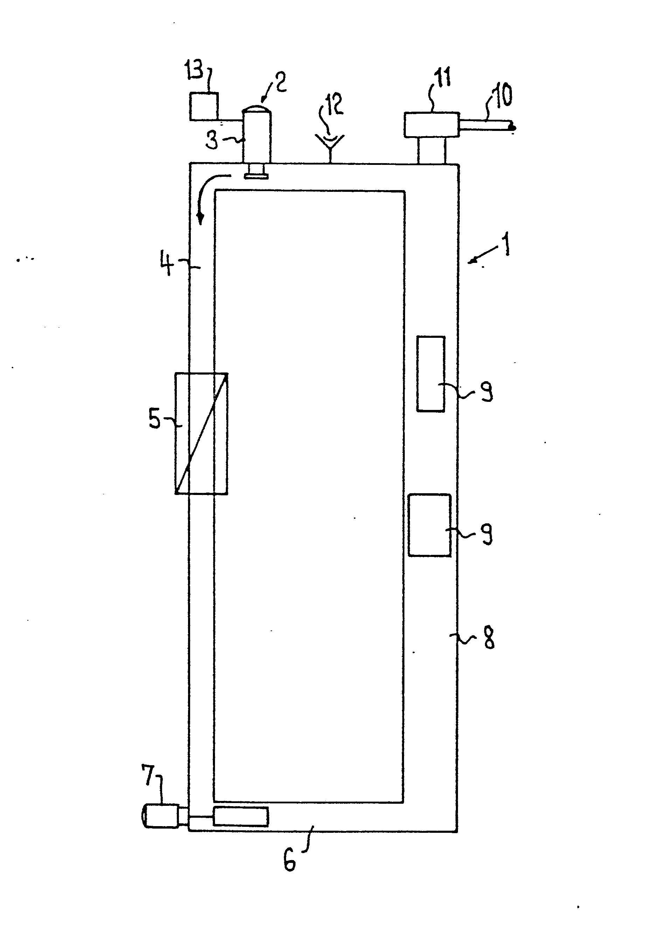

Die Erfindung wird im folgenden anhand einer einzigen Zeichnung eines Ausführungsbeispiels näher erläutert werden, das schematisch einen Bio-Umlaufreaktor darstellt.

Man erkennt den vertikal angeordneten Bio-Umlaufreaktor 1 mit einem Gaseinlass 2, der in vorliegendem Fall als Submersbelüfter 3 ausgebildet ist. Dieser weist eine angepasste Diffusionsrotorgestaltung und Strömungsleiteinrichtung auf, um unmittelbar unter der Flüssigkeitsoberfläche Gase, vorzugsweise Luft, bei 9eringst vorhandenem hydrostatischen Druck unter gleichzeitiger Umwälzung der Flüssigkeit, somit bei geringstem Energieaufwand in definierbarer Menge einzutragen. Die Leistung des Submersbelüfters muss ausreichend sein, um die als Mikrobläschen feinstdispergierte Luft entgegen der Auftriebskraft nach abwärts zu befördern, wobei die Strömungsrichtung der Dispersion in diesem Falle im Gegenuhrzeigersinn, siehe Pfeil, verläuft. Im vertikalen Teil 4, in welchem sich die Dispersion nach abwärts bewegt, befindet sich ein Wärmeaustauscher 5, mit welchem entweder Fremdwärme, die bei der Anfahrphase eventuell benötigt wird, zugeführt oder Prozesswärme abgeführt werden kann, die durch die bakterielle Reaktion entsteht. Im unteren horizontalen Teil 6 befindet sich eine Umwälzeinrichtung 7, die beispielsweise ein Schneckenförderer oder dergleichen sein kann. Eine solche Umwälzeinrichtung wird benötigt, falls die Flüssigkeit hoch viskos ist, beispielsweise zäher Schlamm, während sie bei Abwässern, Molke oder anderen niedrig viskosen Flüssigkeiten nicht benötigt wird. Im vertikalen Teil 8, in welchem die Dispersion nach oben strömt, sind Mittel 9 zur Erzeugung von Pulsationen und Mikrowirbel angeordnet. Diese Mittel haben die Aufgabe den Strömungsquerschnitt zu verengen und zu erweitern und können beispielsweise als wellrohrähnliche Hindernisse oder verschiedenste Schikanen ausgebildet sein. Die dadurch erzeugten Pulsationen und Mikrowirbel haben die Aufgabe, die Koaleszenz der Mikrobläschen entscheidend zu verhindern und durch immer wieder erfolgendes Zerteilen der Gasbläschen die Kontaktzeit zwischen Gas und Flüssigkeit bei grösster Phasengrenzfläche zu verlängern und durch wechselnden Druckaufbau und Entspannung einen erhöhten Reaktionsgrad zu erreichen. Am Ende des vertikalen Teils 8 befindet sich ein Flüssigkeitsablauf 10 mit einer Entgasungseinrichtung 11. Die Entgasungseinrichtung kann aus einem Zyklon oder einer ähnlichen Einrichtung bestehen, die dazu geeignet ist, das in der Flüssigkeit vorhandene Gas möglichst vollständig zu entfernen, damit nur entgaste Flüssigkeit dem Submersbelüfter zum erneuten Gaseintrag zugeführt wird. Zwischen dem Flüssigkeitsablauf 10 und dem Gaseinlass 2 befindet sich der Flüssigkeitseinlass 12 mit einer Regel- und Dosiereinrichtung, um jeweils die für das Verfahren günstigste Menge der zu behandelnden Flüssigkeit zuführen zu können. Dem Submersbelüfter 3 wird die Luft über eine Regeleinrichtung 13 zugeführt, die vorzugsweise den Ansaugquerschnitt der Gaszufuhr steuert, um die erforderliche Gasmenge oder Zusammensetzung beeinflussen zu können.

Der abwärtsführende Teil 4 des Reaktors weist einen vielfach kleineren Querschnitt auf als der aufwärtsführende Teil 8, vorzugsweise einen vier bis acht Mal kleineren Querschnitt. Dadurch wird erreicht, dass die Strömungsgeschwindigkeit im Abwärtsstrom wesentlich erhöht wird. Dies ist erforderlich, um in definierter Geschwindigkeit den Auftrieb der Gasbläschen zu überwinden und die Mikrobläschen möglichst in voller Zahl unter dem zusätzlichen hydrostatischen Druck, der durch die Bauhöhe gegeben ist, in die untere horizontale Querverbindung 6 mitzureissen. Durch diese Bauweise wird die für die biologische Reaktion erwünschte lange Kontaktzeit zwischen Gas und Flüssigkeit erreicht, die dann durch die Verringerung der Umwälzgeschwindigkeit in der Aufstiegsphase infolge des grösseren Durchmessers und Volumens noch wesentlich erhöht wird.

Aus obiger Beschreibung geht hervor, dass die durch den Submersbelüfter eingebrachte Luft in Form von Gasbläschen im abwärts gerichteten Teil infolge des zunehmenden hydrostatischen Drucks zu immer kleiner werdenden Mikrobläschen verkleinert werden, wodurch der Sauerstofftransfer wesentlich erhöht wird, und dass diese Mikrobläschen durch die Hindernisse 9 daran gehindert werden, sich zu vereinigen, wodurch die grosse Kontaktfläche erhalten bleibt. Dies führt dazu, dass die Sauerstoff-Eintragsleistung durch Luftzufuhr, bei vergleichbarem Energieaufwand, um ein Vielfaches erhöht und maximale Sauerstoffnutzung erreicht werden konnte und sich die biologisch erforderliche Behandlumgszeit der Flüssigkeit um ein Vielfaches erniedrigte. In diesem Bioreaktor können Abwässer und Klärschlämme im aerob-mesophilen oder wahlweise im aerob-thermophilen Berelch gefahren werden. Eine Bauhöhe von 4 bis 8 m, vorzugsweise 6 m, hat sich als günstig erwiesen, doch kommen selbstverständlich auch andere Dimensionen in Frage.

Während es vorteilhaft ist, den Gaseinlass im horizontalen Teil des Reaktors anzuordnen, ist es auch möglich, diesen an einem anderen Ort in der oberen Hälfte des Reaktors vorzusehen, wobei allerdings ein höherer Energieaufwand zum Einbringen erforderlich ist. Ausserdem ist es nicht unbedingt erforderlich, einen Submersbelüfter zu verwenden. Andere bekannte Einrichtungen zum Einbringen und Mischen von Gasen können auch verwendet werden. Es sind auch andere Querschnittsrelationen zwischen dem abwärts- und aufwärtsführenden Teil möglich, doch sollte der Querschnitt des abwärtsführenden Teils nicht grösser sein als derjenige des aufwärtsführenden Teils. Das oben beschriebene Verfahren und die Vorrichtung ist nicht nur für die Behandlung von Abwässer und Klärschlämmen geeignet, sondern beispielsweise auch zur Behandlung von Flüssigmist, Molke und Schlempe.

Der Wärmeaustauscher muss sich nicht notwendigerweise im abwärtsführenden Teil befinden und kann auch an einem anderen Ort angeordnet sein.

Die Vorrichtung kann auch als unter Ueberdruck stehender Reaktor gefahren werden.

Infolge der wesentlichen Verkleinerung der Anlagen und der dadurch erzielbaren Einsparung an Aufwand bei Industrie- und Kommunalkläranlagen und anderen Anlagen ist es möglich, diese vermehrt in Industrie und kleinen Gemeinden einzusetzen.

## Patentansprüche:

1. Verfahren zur Aufrechterhaltung einer Feinstdispersion von Gasen in Flüssigkeiten, wobei die Gase in der oberen Hälfte einer vertikal angeordneten Umlaufvorrichtung unter gleichzeitigem mechanischen Umwälzen mit einer definierten Strömungsgeschwindigkeit und bei definiertem hydrostatischen Druck eingebracht werden, dadurch gekennzeichnet, dass die entstandenen Mikrobläschen entgegen ihrer Auftriebskraft und mit einer grösseren Strömungsgeschwindigkeit im Abwärtsstrom als im Aufwärtsstrom in den unteren horizontalen Teil der Vorrichtung befördert werden und dass im aufwärtsführenden Teil der Vorrichtung Pulsationenen und Mikrowirbel erzeugt werden und anschliessend eine Entgasung der Flüssigkeit erfolgt.

2. Verfahren nach Anspruch 1, dadurch gekennzeichnet, dass die Gase mittels eines Submersbelüfters in die obere Horizontalverbindung der Umlaufvorrichtung eingebracht werden.

3. Verfahren nach Anspruch 1 oder 2, dadurch gekennzeichnet, dass bei Ueberdruck gearbeitet wird.

4. Vertikal angeordnete Umlaufvorrichtung zur Ausführung des Verfahrens nach Anspruch 1, mit einem Gaseinlass und einem Flüssigkeitseinlass und -auslass, dadurch gekennzeichnet, dass der abwärtsführende Teil (4), einen kleineren oder höchstens gleichen Querschnitt aufweist als der aufwärtsführende Teil (8), dass der Gaseinlass (2) in der oberen Hälfte angeordnet ist, und der aufwärtsführende Teil Mittel (9) zur Erzeugung von Pulsationen und Mikrowirbeln und eine Entgasungseinrichtung (11) aufweist.

5. Vorrichtung nach Anspruch 4, dadurch gekennzeichnet, dass der Gaseinlass (2) ein Submerslüfter (3) ist und im oberen horizontalen Verbindungsteil angeordnet ist.

6. Vorrichtung nach Anspruch 4 oder 5, dadurch gekennzeichnet, dass der Querschnitt des abwärtsführenden Teils (4) vier bis acht Mal kleiner ist als derjenige des aufwärtsführenden Teils (8).

7. Vorrichtung nach einem der Ansprüche 4 bis 6, dadurch gekennzeichnet, dass sie einen Wärmeaustauscher (5) aufweist.

8. Vorrichtung nach einem der Ansprüche 4 bis 7, dadurch gekennzeichnet, dass die Mittel (9) zur Erzeugung von pulsationen und Mikrowirbel wellrohrähnliche Hindernisse enthalten.

9. Vorrichtung nach einem der Ansprüche 4 bis 8, dadurch gekennzeichnet, dass sie eine Umwälzeinrichtung (7) aufweist.

10. Vorrichtung nach einem der Ansprüche 4 bis 9, dadurch gekennzeichnet, dass die Entgasungseinrichtung (11), insbesondere Zyklon, am Flüssigkeitsauslass (10) angeordnet ist.

11. Vorrichtung nach einem der Ansprüche 4 bis 10, dadurch gekennzeichnet, dass der Flüssigkeitseinlass (12) eine Regel- und Dosiereinrichtung aufweist.

12. Vorrichtung nach einem der Ansprüche 4 bis 11, dadurch gekennzeichnet, dass der Gaseinlass (2) eine Regeleinrichtung (13) für die Gaszufuhr aufweist.

## Claims

1. Process for maintaining a fine gas dispersion in liquids, wherein the gases are fed into the upper half of a vertically arranged circulation device under simultaneous mechanical revolution with a defined velocity of flow and by defined hydrostatic pressure, characterized in that the produced microbubbles are transported against their lifting force and with a greater velocity of flow in the down stream than in the up stream into the lower horizontal part of the device and in that pulsations and microwhirls are produced in the riser part of the device and afterwards an outgassing of the liquid takes place.

2. Process according to claim 1, characterized in that the gases are fed into the upper horizontal connecting part of the circulation device by means of a subsurface aerator.

3. Process according to claim 1 or 2, characterized in that one works with overpressure.

4. Vertically arranged circulation device for implementing the process of claim 1, with a gas inlet and a liquid inlet and outlet, characterized in that the cross-section of the downcomer part (4) is smaller than or at least equal to the cross-section of the riser part (8), in that the gas inlet (2) is arranged in the upper half of the device and in that the riser part comprises means (9) for producing pulsations and microwhirls and an outgassing device (11).

5. Device according to claim 1, characterized in that the gas inlet (2) is a subsurface aerator (3) which is arranged in the upper horizontal connecting part of the device.

6. Device according to claim 4 or 5, characterized in that the cross-section of the downcomer part (4) is four to eight times smaller than the one of the riser part (8).

7. Device according to one of the claims 4 to 6, characterized in that it comprises a heat exchanger.

8. Device according to one of the claims 4 to 7, characterized in that the means (9) for producing pulsations and microwhirls comprise obstacles similar to corrugated pipes.

9. Device according to one of the claims 4 to 8, characterized in that it comprises an agitator (7).

10. Device according to one of the claims 4 to 9, characterized in that the outgassing device, more particularly a cyclone (11) is arranged at the liquid outlet (10).

11. Device according to one of the claims 4 to 10, characterized in that the liquid inlet (12) comprises an adjusting and dosing device.

12. Device according to one of the claims 4 to 11, characterized in that the gas inlet (2) comprises an adjusting device (13) for the supply of gas.

## Revendications

1. Procédé pour le maintien d'une dispersion fine de gaz dans les liquides, dans lequel les gaz sont délivrés dans la moitié supérieure d'un dispositif de circulation disposé verticalement avec revolution mécanique simultanée, à une vitesse d'écoulement definie et sous une pression hydrostatique définie, caractérisé en ce que les microbulles sont transportées dans la partie horizontale inférieure du dispositif contre leur force ascentionnelle et avec une vitesse d'écoulement plus grande dans le courant descendant que dans le courant ascendant et en ce que des pulsations et microtourbillons sont produits dans la partie montante du dispositif et qu'ensuite un dégazage du liquide est effectué.

2. Procédé selon la revendication 1, caractérisé en ce que les gaz sont délivrés dans la partie horizontale supérieure de liaison du dispositif de circulation au moyen d'un aérateur submergé.

3. Procédé selon la revendication 1 ou 2, caractérisé en ce que l'on opère par surpression.

4. Dispositif de circulation disposé verticalement pour la mise en oeuvre du procédé selon la revendication 1, avec une entrée de gaz et une entrée et sortie de liquide, caractérisé en ce que la section de la partie descendante (4) est plus petite que ou égale a la section de la partie montante (8), en ce que l'entrée de gaz (2) est disposée dans la moitié supérieure du dispositif et en ce que la partie montante comprend des moyens (9) pour produire des pulsations et microtourbillons et un dispositif de dégazage (11).

5. Dispositif selon la revendication 4, caractérisé en ce que l'entrée de gaz (2) est un aérateur submergé (3) dispose dans la partie horizontale supérieure de liaison du dispositif.

6. Dispositif selon la revendication 4 ou 5, caractérié en ce que la section de la partie descendante (4) est quatre à huit fois plus petite que celle de la partie montante (8).

7. Dispositif selon l'une des revendications 4 à 6, caractérisé en ce qu'il comprend un échangeur de chaleur (5).

8. Dispositif selon l'une des revendications 4 à 7, caractérisé en ce que les moyens (9) pour produire des pulsations et microtourbillons comprennent des obstacles similaires à des tubes ondulés.

9. Dispositif selon l'une des revendications 4 à 8, caractérisé en ce qu'il comprend un agitateur (7).

10. Dispositif selon l'une des revendications 4 à 9, caractérisé en ce que le dispositif de dégazage, plus particulièrement un cyclone (11), est disposé à la sortie de liquide (10).

11. Dispositif selon l'une des revendications 4 à 10, caractérisé en ce que l'entrée de liquide (12) comprend un dispositif de réglage et de dosage.

12. Dispositif selon l'une des revendications 4 à 11, caractérisé en ce que l'entrée de gaz (2) comprend un dispositif de reglage (13) de l'alimentation en gaz.